# EUROPEAN PATENT APPLICATION

(11) **EP 4 779 578 A1**
(43) Date of publication of application: **22.07.2026**
(21) Application number: 26150366.8
(22) Date of filing: 06.01.2026
(51) Int. Cl.: G06V 10/141, G06V 10/80, G06V 20/56, G06V 20/59

(54) **VEHICLE MANUFACTURING SYSTEM, VEHICLE MANUFACTURING METHOD, AND CONTROL APPARATUS**

(30) Priority: 17.01.2025 JP 2025007130
(71) Applicant: Toyota Jidosha Kabushiki Kaisha, Toyota-shi, Aichi-ken 471-8571 (JP)
(72) Inventor: CHIBA, Hiroya, Toyota-shi, 471-8571 (JP); IWAHORI, Kento, Toyota-shi, 471-8571 (JP); OKA, Yuhei, Toyota-shi, 471-8571 (JP)
(74) Representative: D Young & Co LLP

(57) **Abstract**

A vehicle manufacturing system according to the present disclosure is a vehicle manufacturing system that controls traveling of a plurality of vehicles (100) during a manufacturing process or a transporting process, the vehicle manufacturing system including: a plurality of cameras configured to capture an image of a traveling area where the vehicles travel and an area near the traveling area; a blinking control unit configured to control a plurality of lights of the vehicles in such a way that the vehicles cause the lights to blink according to a blinking pattern; and a recognition unit configured to recognize, when one of the cameras does not capture an image of the plurality of lights, a blinking pattern of the lights based on captured images captured by at least two cameras.

## Description

### BACKGROUND

The present disclosure relates to a vehicle manufacturing system, a vehicle manufacturing method, and a control apparatus.

Patent Literature 1 discloses a remote control device that remotely controls a mobile body. This remote control device acquires three-dimensional point cloud data measured using a distance measuring device. The remote control device estimates a position and an orientation of the mobile body by matching a template point cloud indicating the mobile body with three-dimensional point cloud data.

[Patent Literature 1] Japanese Patent No. 7424535

### SUMMARY

In a vehicle manufacturing factory, a plurality of vehicles run along a transport path and are sequentially manufactured. Therefore, productivity can be improved. On the other hand, it is also desirable to appropriately control the plurality of vehicles traveling along the transport path.

An object of the present disclosure is to provide a vehicle manufacturing system, a vehicle manufacturing method, and a control apparatus capable of appropriately controlling vehicles.

A vehicle manufacturing system according to the present disclosure is a vehicle manufacturing system that controls traveling of a plurality of vehicles during a manufacturing process or a transporting process, the vehicle manufacturing system including: a plurality of cameras configured to capture an image of a traveling area where the vehicles travel and an area near the traveling area; a blinking control unit configured to control a plurality of lights of the vehicles in such a way that the vehicles cause the lights to blink according to a blinking pattern; and a recognition unit configured to recognize, when one of the cameras does not capture an image of the plurality of lights, a blinking pattern of the lights based on captured images captured by at least two cameras.

In the aforementioned vehicle manufacturing system, the blinking control unit may control lights of the plurality of vehicles in such a way that the blinking pattern varies according to the vehicle, and the recognition unit may identify the vehicle based on the blinking pattern.

In the aforementioned vehicle manufacturing system, the blinking control unit may recognize the blinking pattern in accordance with a switching timing when the plurality of lights switch between ON and OFF.

The plurality of lights may include left and right lights of the vehicle, and the switching timing may vary between the left and right lights.

In the aforementioned vehicle manufacturing system, the plurality of cameras may include in-vehicle cameras mounted on the vehicles, the in-vehicle camera may capture an image of a nearby vehicle that travels near a mounting vehicle on which the in-vehicle camera is mounted, and the mounting vehicle may recognize a blinking pattern of lights of the nearby vehicle.

In the aforementioned vehicle manufacturing system, the plurality of lights may be turned on at a start timing and an end timing of the blinking pattern.

A vehicle manufacturing method according to the present disclosure is vehicle manufacturing method for performing control of a plurality of vehicles during a manufacturing process or a transporting process, the vehicle manufacturing method including: capturing an image of a traveling area where the vehicles travel and an area near the traveling area by a plurality of cameras; controlling a plurality of lights of the vehicles in such a way that the vehicles cause the lights to blink according to a blinking pattern; and recognizing, when one of the cameras does not capture an image of the plurality of lights, a blinking pattern of the lights based on captured images captured by at least two cameras.

In the aforementioned vehicle manufacturing system, lights of the plurality of vehicles may be controlled in such a way that the blinking pattern varies according to the vehicle, and the vehicle may be identified based on the blinking pattern.

In the aforementioned vehicle manufacturing system, the blinking pattern may be recognized in accordance with a switching timing when the plurality of lights switch between ON and OFF.

In the aforementioned vehicle manufacturing system, the plurality of lights may include left and right lights of the vehicle, and the switching timing may vary between the left and right lights.

In the aforementioned vehicle manufacturing system, the plurality of cameras may include in-vehicle cameras mounted on the vehicles, the in-vehicle camera may capture an image of a nearby vehicle that travels near a mounting vehicle on which the in-vehicle camera is mounted, and the mounting vehicle may recognize a blinking pattern of lights of the nearby vehicle.

In the aforementioned vehicle manufacturing system, the plurality of lights may be turned on at a start timing and an end timing of the blinking pattern.

A control apparatus according to the present disclosure is a vehicle control apparatus for controlling traveling of a plurality of vehicles during a manufacturing process or a transporting process, the control apparatus including: a captured image acquisition unit configured to acquire, from each of a plurality of cameras, a captured image obtained by capturing an image of a traveling area where the vehicles travel and an area near the traveling area; a blinking control unit configured to control a plurality of lights of the vehicles in such a way that the vehicles cause the lights to blink according to a blinking pattern; and a recognition unit configured to recognize, when one of the cameras does not capture an image of the plurality of lights, a blinking pattern of the lights based on captured images captured by at least two cameras.

In the above-described control apparatus, lights of the plurality of vehicles may be controlled in such a way that the blinking pattern varies according to the vehicle, and the vehicle may be identified based on the blinking pattern.

In the above-described control apparatus, the blinking pattern may be recognized in accordance with a switching timing when the plurality of lights switch between ON and OFF.

In the above-described control apparatus, the plurality of lights may include left and right lights of the vehicle, and the switching timing may vary between the left and right lights.

In the above-described control apparatus, the plurality of cameras may include in-vehicle cameras mounted on the vehicles, the in-vehicle camera may capture an image of a nearby vehicle that travels near a mounting vehicle on which the in-vehicle camera is mounted, and the mounting vehicle may recognize a blinking pattern of lights of the nearby vehicle.

In the above-described control apparatus, the plurality of lights may be turned on at a start timing and an end timing of the blinking pattern.

According to the present disclosure, it is possible to provide a vehicle manufacturing system, a vehicle manufacturing method, and a control apparatus capable of appropriately controlling vehicles.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a vehicle manufacturing system;
Fig. 2 is a schematic diagram showing a part of the vehicle manufacturing system;
Fig. 3 is a plan view schematically showing arrangement of traveling vehicles and sensors;
Fig. 4 is a block diagram showing a control system of the vehicle manufacturing system;
Fig. 5 is a diagram showing a timing of blinking patterns;
Fig. 6 is a flowchart showing a vehicle manufacturing method;
Fig. 7 is a plan view schematically showing arrangement of traveling vehicles and in-vehicle sensors;
Fig. 8 is a diagram for describing travel control of vehicles;
Fig. 9 is a control block diagram for describing a travel control example 1;
Fig. 10 is a flowchart for describing the travel control example 1;
Fig. 11 is a control block diagram for describing a travel control example 2; and
Fig. 12 is a flowchart for describing the travel control example 2.

### DESCRIPTION OF EMBODIMENTS

Embodiments of the present disclosure will now be described with reference to the drawings. However, the claimed disclosure is not limited to the following embodiments. Moreover, not all of the configurations described in the embodiments are essential as means for solving the problem. For the sake of clarity of the explanation, the following descriptions and drawings have been omitted and simplified as appropriate. In each drawing, the same elements have the same reference signs, and repeated descriptions have been omitted as appropriate.

### First Embodiment

### (Vehicle Manufacturing System)

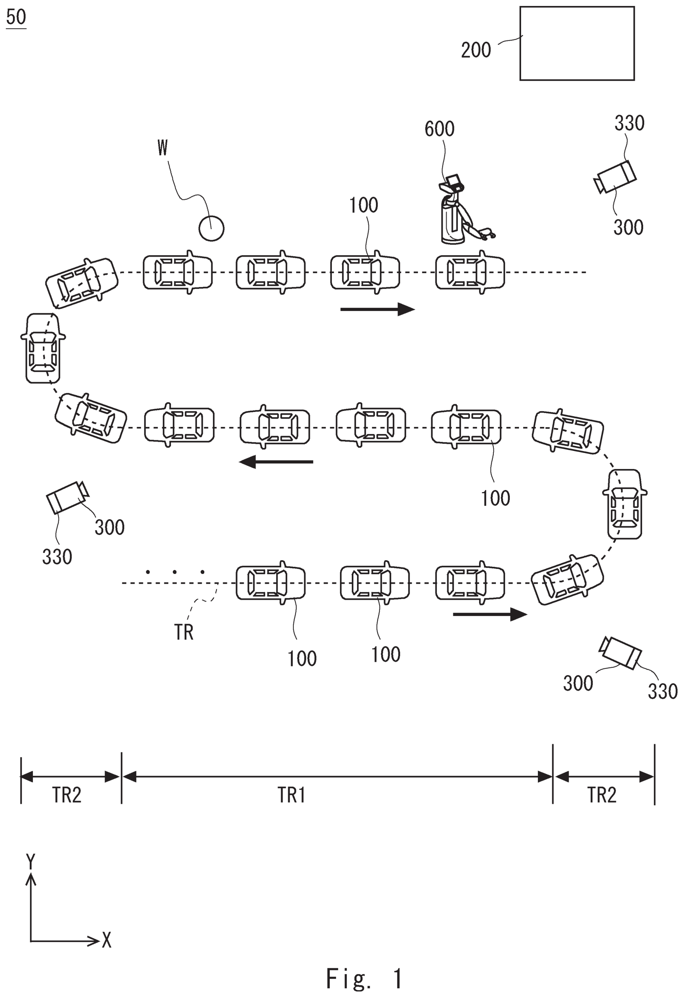

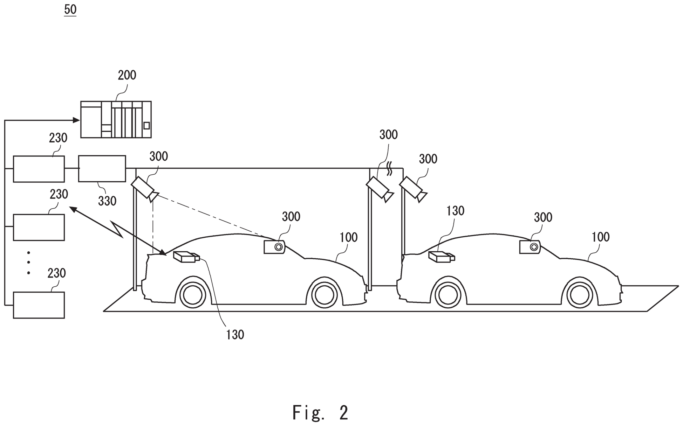

With reference to Figs. 1 and 2, a vehicle manufacturing system 50 according to this embodiment will be described. Fig. 1 is a schematic diagram showing a configuration of the vehicle manufacturing system 50. Fig. 2 is a diagram schematically showing two traveling vehicles 100. Fig. 1 shows an XY orthogonal coordinate system for the sake of clarity of the explanation.

The vehicle manufacturing system (this may also be referred to as the system) 50 is used in a vehicle manufacturing factory where vehicles 100 are manufactured. The vehicle manufacturing system 50 is also used in a transport location where a transporting process such as transportation to a yard or shipment is carried out. As shown in Fig. 1, the vehicle manufacturing system 50 includes a server 200, a sensor 300, and a robot 600. The plurality of vehicles 100 are self-driving vehicles that can travel by themselves during a manufacturing process. The vehicle manufacturing system 50 performs control in such a way that the plurality of vehicles 100 perform travel in a form of a platoon (i.e. a formation or an alignment).

The sensor 300 includes a communication apparatus 330 that transmits or receives data to or from the server 200. The server 200 includes a communication apparatus 230 that transmits or receives data to or from the sensor 300. Further, as shown in Fig. 2, the communication apparatus 230 has a function of transmitting or receiving data to or from the vehicle 100. Further, the vehicle 100 includes a communication apparatus 130 that receives data from the server 200. Each of the vehicles 100 includes the communication apparatus 130.

The communication apparatus 130, the communication apparatus 230, and a communication apparatus 330 may each be general-purpose equipment such as a network hub or a router apparatus. The communication apparatus 130, the communication apparatus 230, and the communication apparatus 330 each use, for example, general-purpose wireless communication such as WiFi (registered trademark). In each of the communication apparatus 130, the communication apparatus 230, and the communication apparatus 330, an address for specifying the communication partner is set. An address for communication is, for example, an Internet Protocol (IP) address.

Each of the vehicles 100 is a vehicle whose manufacturing has not yet been completed. As shown in Fig. 1, the vehicle 100 travels along a traveling path TR set in advance. The manufacturing of the vehicle 100 is gradually done as it travels along the traveling path TR. Specifically, while the vehicle 100 travels along the traveling path, workers W, a robot 600, or the like perform assembling of parts, switch operations, welding, inspection, and so on. The work in each manufacturing process is thus performed. The work in each manufacturing process is performed in a predetermined order, whereby the vehicle 100 is manufactured.

A plurality of vehicles 100 travel in a form of a platoon. Specifically, the vehicles 100 travel at a constant speed in such a way that distances between vehicles are constant at a predetermined distance. Further, the plurality of vehicles 100 travel at the same speed. Further, the traveling path TR includes a straight-ahead area TR1 where a vehicle 100 travels straight ahead and a turning area TR2 where the vehicle 100 makes a turn. In the straight-ahead area TR1, the traveling path TR has a linear shape.

The turning area TR2 is a place where the vehicle 100 changes its traveling direction. In the turning area TR2, the vehicle 100 makes a U-turn. In the turning area TR2, for example, the traveling path TR has an arcuate shape having a predetermined radius of curvature. In the turning area TR2, the traveling path TR is a semicircle. The turning area TR2 is provided in each end of the straight-ahead area TR1. For example, after traveling through the straight-ahead area TR1 in the +X direction, the vehicle 100 reaches the turning area TR2. After the vehicle 100 makes a turn by 180 degrees in the turning area TR2, the vehicle 100 travels through the straight-ahead area TR1 in the -X direction. On the other hand, after the vehicle 100 travels through the straight-ahead area TR1 in the -X direction, the vehicle 100 reaches the turning area TR2. After the vehicle 100 makes a turn by 180 degrees in the turning area TR2, the vehicle 100 travels through the straight-ahead area TR1 in the +X direction. In this manner, the manufacturing of the vehicle 100 is gradually done as it alternately passes through the straight-ahead area TR1 and the turning area TR2.

The sensor 300 is a camera that captures an image of the vehicle 100 which is moving or is stopped. The sensor 300 captures an image of one or a plurality of vehicles 100. The sensor 300 is provided to detect inter-vehicle distances or the like. The server 200 is able to detect the position of the vehicle 100 in the factory based on the image captured by the sensor 300. The sensor 300 is installed, for example, on a wall surface, a support column, the ceiling or the like of the factory, and captures an image of the vehicle 100 from an oblique upward angle. The sensor 300 captures an image at an angle of view which includes one or more vehicles 100 that form a platoon. The sensor 300 may be installed at a height the same as that of the vehicles 100 and capture images of one or more vehicles 100 from a side direction thereof.

The communication apparatus 330 transmits the image captured by the sensor 300 to the server 200. The communication apparatus 330 may transmit, besides the captured image, information obtained from the captured image to the server 200. That is, the communication apparatus 330 transmits a result of detection detected in the sensor 300. Note that the communication apparatus 330 may be built in the sensor 300 or may be separated from the sensor 300. Further, the communication apparatus 330 may be shared among a plurality of sensors 300. That is, in a case where the plurality of sensors 300 are installed, one communication apparatus 330 may transmit data to the server 200.

As described above, after the sensor 300 captures an image of the vehicle 100, the communication apparatus 330 transmits the captured image and the like to the server 200. The communication apparatus 230 receives data of the captured image from the sensor 300. The server 200 performs predetermined image processing on the image captured by the sensor 300, whereby it is possible to specify inter-vehicle distances. For example, the server 200 calculates inter-vehicle distances of a plurality of vehicles 100 forming a platoon. The number of vehicles forming a platoon is not particularly limited and may be any number that is equal to or greater than two.

Further, the sensor 300 is not limited to a camera. A sensor for detecting inter-vehicle distances may be various kinds of sensors such as an RGB camera, a far-infrared camera, or a LiDAR. The sensor 300 is not limited to an optical sensor, and may instead be a radar. As a matter of course, two or more sensors 300 may be installed, or two or more sensors 300 may be used in combination with each other. For example, the sensor 300 may include a LiDAR and a camera.

The communication apparatus 330 transmits a result of the detection to the server 200. As described above, the result of the detection transmitted from the sensor 300 may be a captured image or may be information extracted from the image. In a case where, for example, the sensor 300 has an image processing function, the sensor 300 transmits information extracted by image processing to the server 200.

Further, as shown in Fig. 2, the sensor 300 may be mounted on the vehicle 100. The sensor 300 is, for example, an in-vehicle camera, a LiDAR, a radar, or the like. In a case where the sensor 300 is an in-vehicle camera, the sensor 300 captures an image of a vehicle 100 in front (this vehicle may be referred to as a front vehicle). In a case where the sensor 300 is an in-vehicle LiDAR, the sensor 300 measures a distance from the vehicle 100 to the front vehicle 100. The communication apparatus 130 transmits the image and a result of the measurement to the server 200.

The server 200 controls a vehicle 100 in such a way that the vehicle 100 moves along the traveling path TR. Further, the server 200 controls a plurality of vehicles 100 in such a way that the vehicles 100 perform platoon traveling. For example, the vehicles 100 travel along the traveling path TR in one line. The server 200 transmits a control signal to each vehicle 100 by the communication apparatus 230.

The server 200 performs blinking control for causing lights of the vehicle 100 to blink. By performing blinking control, each vehicle 100 causes a plurality of lights to blink according to the blinking pattern. The blinking pattern indicates a timing for switching the lights between ON and OFF in a predetermined blinking period. For example, the lights may blink at a blinking pattern that varies for each vehicle. Further, in each vehicle 100, left and right lights may blink at timings different from each other. The sensor 300 captures, for example, an image of blinking lights as a moving image.

The server 200 recognizes the blinking pattern based on the captured image of the vehicle 100 captured by the sensor 300. The server 200 can control the vehicle 100 based on the result of the recognition. When, for example, the vehicle 100 cannot turn on the lights according to the blinking pattern, it can be detected that there is a failure in the communication function or the like. It is therefore possible for a worker or the like to restore the communication failure. Alternatively, the position of the vehicle 100 whose lights are blinking according to the blinking pattern and the travel order can be detected based on the imaging result in the sensor 300. Then, the server 200 can control the vehicles 100 based on the position of the vehicles 100 and the travel order thereof.

Further, when the blinking pattern varies for each vehicle, the server 200 can specify the vehicle 100 based on the result of recognizing the blinking pattern. Further, when one sensor 300 cannot capture an image of the left and right lights, the server 200 recognizes the blinking pattern based on images captured by a plurality of sensors 300. For example, the server 200 integrates the imaging results in the plurality of sensors 300 and recognizes the blinking pattern of the lights.

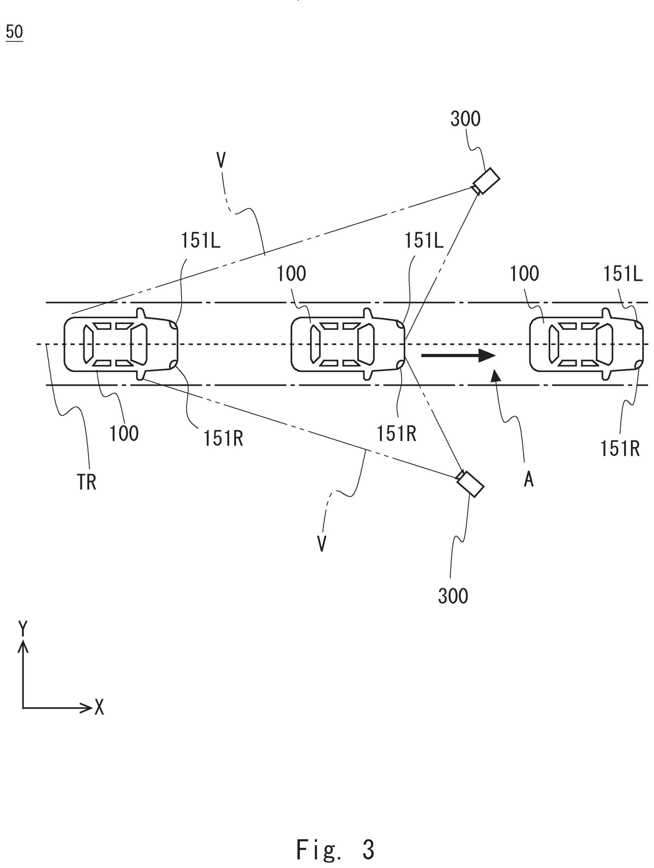

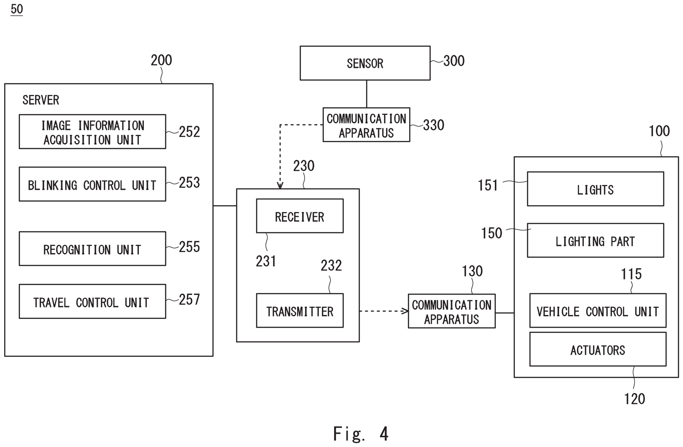

Hereinafter, with reference to Figs. 3 and 4, one example of blinking control and its processing in a manufacturing process or a transporting process will be described. Fig. 3 is a plan view schematically showing vehicles 100 traveling along a traveling path TR and sensors 300 installed nearby. Fig. 3 shows three vehicles 100 that autonomously travel along the traveling path TR. Fig. 4 is a block diagram showing a configuration of the control system of the vehicle manufacturing system 50.

In Fig. 3, three vehicles 100 travel along a linear traveling path TR. When viewed from above, the traveling direction of the vehicles 100 corresponds to the +X direction and the width direction of the vehicles 100 corresponds to the Y direction. Based on the traveling direction of the vehicles 100, the +Y direction corresponds to the left direction and the -Y direction corresponds to the right direction. A plurality of sensors 300 are installed near a traveling area A where the vehicles 100 travel. The sensors 300 capture images of the vehicles 100 traveling in the traveling area A and its surrounding area. The plurality of sensors 300 are installed in such a way that their angles of view V are different from each other. In Fig. 3, the sensors 300 are installed in the respective left and right sides of the traveling area A. The sensors 300 are, for example, visible light cameras.

As shown in Fig. 4, the server 200, which is a control apparatus that controls traveling of the vehicle 100, includes an image information acquisition unit 252, a blinking control unit 253, a recognition unit 255, a travel control unit 257, and a communication apparatus 230. While one vehicle 100 and one sensor 300 are shown in Fig. 4, a plurality of vehicles 100 and sensors 300 are actually provided, as shown in Figs. 1-3.

The communication apparatus 230 includes a receiver 231 and a transmitter 232. The receiver 231 receives various signals, data and the like from the sensor 300 and the vehicle 100. For example, the receiver 231 receives data indicating the detection result of the sensor 300. The data received from the sensor 300 may be image data or data extracted from the image data.

The transmitter 232 transmits various signals, data and the like to the sensor 300 and the vehicle 100. For example, the transmitter 232 transmits control instruction values to the vehicle 100. Of course, the server 200 may transmit and receive data other than the above. As the communication between the receiver 231 and the transmitter 232, it is possible to use processing according to a general-purpose communication standard such as WiFi (registered trademark).

The vehicle 100 includes a vehicle control unit 115, actuators 120, and a communication apparatus 130. The sensor 300 includes a communication apparatus 130. Note that the server 200 is not limited to a single physical apparatus, and a plurality of servers 200 may be disposed in a distributed manner. For example, the database may be a storage device or a cloud server provided separately from the processor.

The communication apparatus 130 of the vehicle 100 is a wireless terminal for wireless communication with the server 200. An IP (Internet Protocol) address or the like is set in the communication apparatus 130. When the communication apparatus 130 of the vehicle 100 receives the control instruction values, the vehicle 100 moves according to the control instruction values. The actuators 120 include a wheel motor for driving the wheels, a steering motor for controlling the steering angle, and a brake for stopping the vehicle. The vehicle control unit 115 generates a control signal to control the actuators 120 in response to the control instruction. The vehicle control unit 115 may consist of an ECU (Electronic Control Unit). Thus, the vehicle 100 can move along the traveling path TR.

The vehicle 100 further includes a lighting part 150 and lights 151. The lights 151 include, for example, headlights, position lights (car width lights), and blinkers. Fig. 3 shows a left light 151L and a right light 151R as the lights 151. For example, the lights 151L and 151R are front blinkers and are attached to the front side of the vehicle 100. As a matter of course, the lights 151 may be attached to a side or back part of the vehicle 100. For example, the lights 151 may be back lights, tail lights, brake lights, side blinkers, rear blinkers, or the like. The lights 151 can be visually recognized from the outside of the vehicle 100.

The lighting part 150 turns on the lights 151. For example, the lighting part 150 includes switches or the like for controlling ON and OFF of the lights 151. As will be described later, the lighting part 150 can turn ON and OFF the lights 151 according to the blinking pattern. Further, the lighting part 150 can control the left light 151L and the right light 151R independently from each other.

While the server 200 performs image processing and so on on the captured image acquired from the sensor 300 in the following description, the processing may be performed in a device other than the server 200. For example, the sensor 300 may perform a part of the processing. Specifically, the sensor 300 may extract features that are necessary for image processing, and transmit the features to the server 200. Alternatively, a processor such as a Graphics Processing Unit (GPU) provided in the sensor 300 may recognize the blinking pattern and transmit the result of the recognition.

As described above, the sensor 300 transmits the captured image to the server 200. The captured image may either be a moving image or continuous still images. When the communication apparatus 230 of the server 200 receives the captured image, the image information acquisition unit 252 acquires the captured image. The image information acquisition unit 252 acquires frames and the capturing time, and records the acquired information in a memory or the like. The sensor 300 captures images at a frame rate of, for example, 30 fps or 60 fps.

The blinking control unit 253 executes blinking control for causing the lights 151 of the vehicle 100 to blink. For example, the blinking control unit 253 causes the lights to blink at blinking patterns different from each other for each vehicle 100. A blinking pattern is allocated to an address of the communication apparatus 130 of the vehicle 100 in advance. The blinking pattern repeats ON and OFF of the lights 151 in a certain blinking period between a start timing and an end timing.

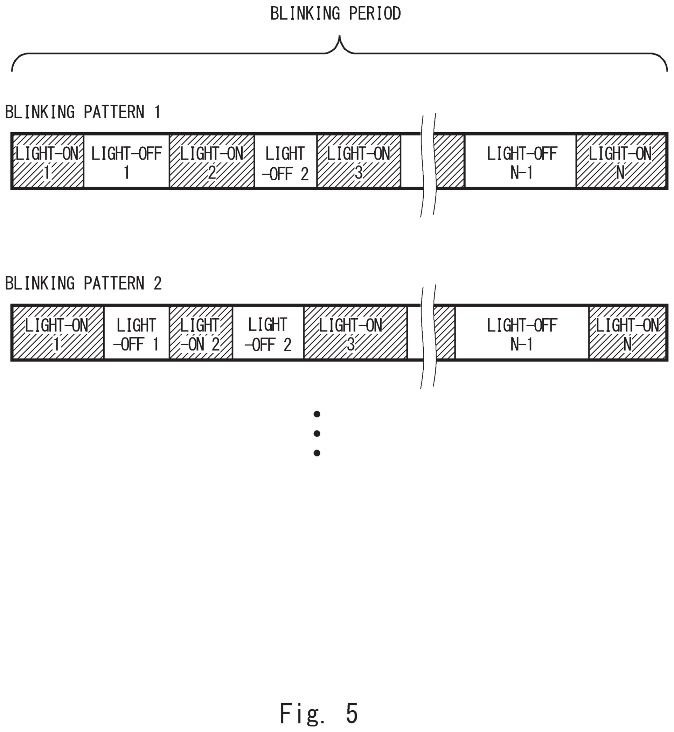

Fig. 5 is a diagram for describing the blinking patterns. Fig. 5 shows a timing of light-on (ON) and light-off (OFF) of the lights 151 in the blinking period. For the sake of convenience of the description, Fig. 5 shows two blinking patterns as a blinking pattern 1 and a blinking pattern 2. Fig. 5 includes N (N is an integer equal to or greater than 2) times of light-on and (N-1) times of light-off in the blinking period.

The switching timing when the lights 151 are switched between ON and OFF varies depending on the blinking pattern. For example, the time width of one time of light-on may vary depending on the blinking pattern. The time width of one time of light-off may vary depending on the blinking pattern. The time width of light-on may vary for each light-on. The time width of the light-off may vary for each light-off. The number of times of light-on and the number of times of light-off in the blinking period may vary depending on the blinking pattern. The number of times of light-off in the blinking period may vary depending on the blinking pattern. Further, the switching timing between ON and OFF may vary between the left light 151L and the right light 151R.

The blinking control unit 253 generates a blinking control signal indicating the blinking pattern. The blinking control signal is a signal indicating the switching timing between ON and OFF of the lights 151. The transmitter 232 transmits the blinking control signal to the communication apparatus 130.

In this example, the blinking pattern varies depending on the vehicle 100. As described above, the communication apparatuses 130 mounted on the vehicles 100 each include an address. Therefore, the blinking pattern may be determined for each address of the communication apparatus 130. For example, the blinking control unit 253 stores its unique blinking pattern for each address of the communication apparatus 130. Accordingly, the blinking control unit 253 can cause the lights 151 to blink at different blinking patterns for each vehicle 100. In this case, the blinking control signal includes a switching timing and a transmission destination address. Further, in one vehicle 100, the switching timing varies between the left light 151L and the right light 151R.

The recognition unit 255 recognizes the blinking pattern based on the captured image. For example, the recognition unit 255 specifies the switching timing when the lights 151L and 151R switch between ON and OFF by analyzing the captured image. Specifically, the recognition unit 255 detects the positions of the lights 151L and 151R in a frame of the captured image, and specifies the pixel addresses thereof. Known image processing and machine learning models can be used to detect the lights 151L and 151R. The recognition unit 255 determines whether the lights 151L and 151R are turned on or off based on the luminance of pixels corresponding to the lights 151L and 151R. Alternatively, it is possible to detect switching between ON and OFF of the lights 151L and 151R by comparing the luminance of the pixels between frames.

For example, the captured image is input to a detection model that uses artificial intelligence, whereby the recognition unit 255 can detect the positions of the lights and ON/OFF of these lights. The detection model may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset has, for example, a plurality of training images including the vehicles 100, and a ground-truth label indicating the positions of the lights. When CNN learning is performed, parameters of the CNN are preferably updated in such a way that the error between the result of the output by the detection model and the ground-truth label is reduced by a back propagation method.

The recognition unit 255 extracts, from a plurality of frame images, a light-on start frame and a light-on end frame for each light-on. The recognition unit 255 further extracts, from the plurality of frame images, a light-off start frame and a light-off end frame for each light-off. The light-on start frame is a frame in which the light is switched from off to on. The light-off start frame is a frame in which the light is switched from on to off. The light-on end frame is a frame which is just before the light-off start frame. The light-off end frame is a frame just before the light-on start frame.

Then the recognition unit 255 records time of the frames corresponding to switching between ON and OFF of the lights 151L and 151R as time stamps. In this way, the recognition unit 255 can detect the switching timing between ON and OFF of the lights 151 in the blinking period. The switching timing may be time elapsed from the start timing of the blinking control, or may be an absolute time.

Note that the recognition unit 255 can measure the number of times of light-on and the number of times of light-off based on the switching timing. The recognition unit 255 measures a time width of each light-on and a time width of each light-off based on the switching timing. The recognition unit 255 may record the start timing and the end timing of blinking control, the number of times of light-on and the number of times of light-off, and information such as the time width of light-on and the time width of light-off as measurement patterns. The recognition unit 255 records the measurement pattern of the left light 151L and the measurement pattern of the right light 151R.

The recognition unit 255 recognizes the blinking pattern based on the the imaging result. For example, the blinking pattern that matches the measurement pattern is recognized according to the switching timing of the lights 151L and 151R. For example, the blinking control unit 253 stores the switching timing of the blinking pattern for each vehicle in advance. The recognition unit 255 recognizes the blinking patterns of the vehicles 100 by comparing the switching timing in the blinking pattern with the switching timing in the measurement pattern. Then one of the plurality of blinking patterns stored in advance that matches the measurement pattern is extracted.

Accordingly, the blinking pattern can be recognized, whereby it is possible to appropriately control vehicles 100. For example, it is possible to specify which vehicle in the platoon has caused the lights to blink according to the blinking pattern. It is therefore possible to detect the positions and the like of the vehicle 100 whose lights 151 are blinking according to the blinking pattern. It is therefore possible to appropriately control the vehicles 100.

Further, the recognition unit 255 can identify a vehicle based on the result of recognizing the blinking pattern. It is therefore possible to appropriately specify the positions of the vehicles 100 and the travel order thereof. For example, when there is a limitation in the number of communication apparatuses 130, the communication apparatus 130 may be repeatedly used. After manufacturing of one vehicle 100 is completed in the vehicle manufacturing system 50, the communication apparatus 130 removed from this vehicle 100 may be mounted on another vehicle 100. In this case, the server 200 can accurately detect, for each vehicle, the position of the vehicle 100 and the travel order thereof in the platoon. For example, the server 200 detects the travel order of the vehicles 100 in the platoon, whereby it is possible to appropriately control the plurality of vehicles 100.

When one sensor 300 cannot capture an image of the left light 151L and the right light 151R, the recognition unit 255 may recognize the blinking pattern based on captured images in a plurality of sensors 300. In Fig. 3, for example, in the second vehicle 100, one sensor 300 cannot capture an image of both the left light 151L and the right light 151R. Specifically, of the two sensors 300 shown in Fig. 3, the angle of view V of the sensor 300 on the +Y side includes the light 151L but does not include the light 151R. The angle of view V of the sensor 300 on the -Y side includes the light 151R but does not include the light 151L.

As described above, depending on positions of the vehicles 100 and the arrangement of the sensors 300 in the facility, it is possible that one sensor 300 may not be able to capture an image of both of the lights 151L and 151R. Alternatively, when there is an object or a person between the vehicle 100 and the sensor 300, one sensor 300 may not be able to capture an image of both of the left light 151L and the right light 151R. In this manner, one sensor 300 may not be able to capture an image of the left light 151L and the right light 151R of one vehicle 100.

When one sensor 300 cannot capture an image of the plurality of lights 151, the recognition unit 255 recognizes the blinking pattern based on captured images in two sensors 300. The recognition unit 255 recognizes the blinking pattern by integrating the captured images in the two sensors 300. In the example shown in Fig. 3, the recognition unit 255 detects the switching timing of the light 151L based on the captured image in the sensor 300 on the +Y side, and detects the switching timing of the light 151R based on the captured image in the sensor 300 on the -Y side.

The recognition unit 255 integrates the results of detecting the switching timing of the left light 151L and the right light 151R. Accordingly, the recognition unit 255 can recognize the blinking pattern of the vehicle 100 definitely. That is, even when one sensor 300 cannot capture an image of the lights 151L and 151R of the vehicle 100, the blinking pattern can be accurately recognized.

The travel control unit 257 generates, for example, a travel control signal for causing the vehicle 100 to stop, temporarily stop, make an emergency stop, decelerate, accelerate, or start moving. After the travel control unit 257 outputs the travel control signal to the transmitter 232, the transmitter 232 transmits the travel control signal to the vehicle 100. It is therefore possible to cause the vehicle 100 to stop, temporarily stop, make an emergency stop, decelerate, accelerate, or start moving.

The travel control unit 257 may control the traveling of the vehicles 100 based on the result of recognizing the blinking pattern. It is assumed, for example, that the positions of the sensors 300 in the facility are known. In this case, the server 200 can detect the position for each of the vehicles 100 based on captured images in the sensors 300. The travel control unit 257 can control the traveling speed, steering angle, and so on based on the positions of the vehicles 100. The traveling can thus be controlled. Alternatively, the travel control unit 257 may control the traveling speed and the steering angle according to the travel order in the platoon.

Further, both left and right lights 151 are preferably switched ON at the start timing and the end timing of the blinking pattern. For example, in Fig. 5, the lights 151 are ON at the beginning and the end of the blinking period. It is therefore possible to definitely detect the start timing and the end timing of the blinking pattern. The recognition unit 255 can recognize the blinking pattern by synchronizing the start timing of the left light 151L and that of the right light 151R. Further, it is preferable that the blinking period between the start timing and the end timing of the blinking pattern is the same in the plurality of vehicles.

While the example in which the blinking control unit 253 causes the left light 151L and the right light 151R to blink has been described in the aforementioned descriptions, the lights 151 whose blinking is controlled by the blinking control unit 253 are not limited to the left light 151L and the right light 151R. For example, front and rear lights 151 may be caused to blink. Further, the blinking control unit 253 may cause three or more lights 151 to blink. The recognition unit 255 can recognize the blinking pattern based on the ON/OFF timing of the plurality of lights 151. It is therefore possible to specify the vehicle 100, whereby it is possible to appropriately control traveling.

When the blinking control unit 253 causes a plurality of lights 151 to blink in one vehicle, it is possible that one sensor 300 may not be able to capture an image of all the lights. In this case, the recognition unit 255 may recognize the blinking pattern based on captured images in two or more sensors 300.

Further, since the vehicle 100 is traveling, it is possible that the vehicle 100 may be deviated from the angle of view V of one sensor 300 during a blinking period. Alternatively, it is possible that the worker W or the like may pass between the sensor 300 and the light 151 during the blinking period. Even in this case, the recognition unit 255 can recognize the blinking pattern based on the captured images in two or more sensors 300. For example, when one sensor 300 cannot capture an image of the left light 151L during the blinking period, the recognition unit 255 performs recognition processing by using a captured image in another sensor 300.

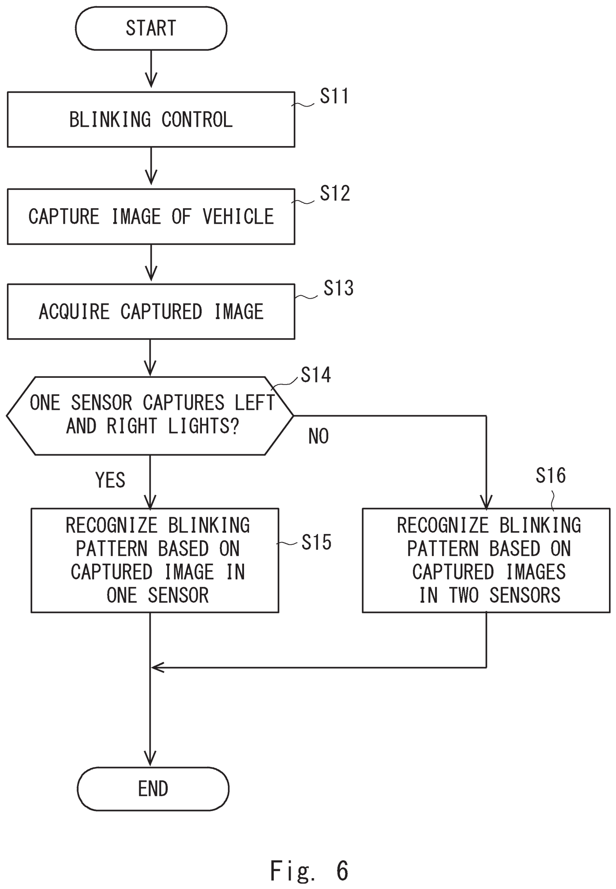

With reference to Fig. 6, one example of a vehicle manufacturing method will be described. Fig. 6 is a flowchart showing one example of the vehicle manufacturing method. First, the blinking control unit 253 performs blinking control (S11). For example, the blinking control unit 253 generates a blinking control signal and transmits the blinking control signal to the vehicle 100 so that the vehicle 100 causes lights to blink according to the blinking pattern. The sensor 300 captures an image of the vehicle 100 (S12). In this example, the sensor 300 captures a moving image of the vehicle 100 whose lights are blinking.

The image acquisition unit acquires the captured image captured by the sensor 300 (S13). In this example, the communication apparatus 330 of the sensor 300 transmits the captured image to the server 200. Next, the recognition unit 255 determines whether or not one sensor 300 can capture an image of the left light 151L and the right light 151R (S14). When one sensor 300 can capture an image of the left light 151L and the right light 151R (YES in S14), the recognition unit 255 recognizes the blinking pattern based on the imaging result in this sensor 300 (S15).

When one sensor 300 cannot capture an image of the left light 151L and the right light 151R (NO in S14), the recognition unit 255 recognizes the blinking pattern based on imaging results in two sensors 300 (S16). That is, the recognition unit 255 recognizes the blinking pattern based on the captured image in the sensor 300 obtained by capturing an image of the left light 151L and the captured image in another sensor 300 obtained by capturing an image of the right light 151R. Accordingly, it is possible to appropriately recognize the blinking pattern.

Further, at least some of the vehicles 100 may have the same blinking pattern. For example, the blinking pattern may vary for each vehicle type. In this case, vehicles 100 whose vehicle type is the same have the same blinking pattern. Alternatively, the blinking pattern may be changed according to the production process, the vehicle type or the like.

### Second Embodiment

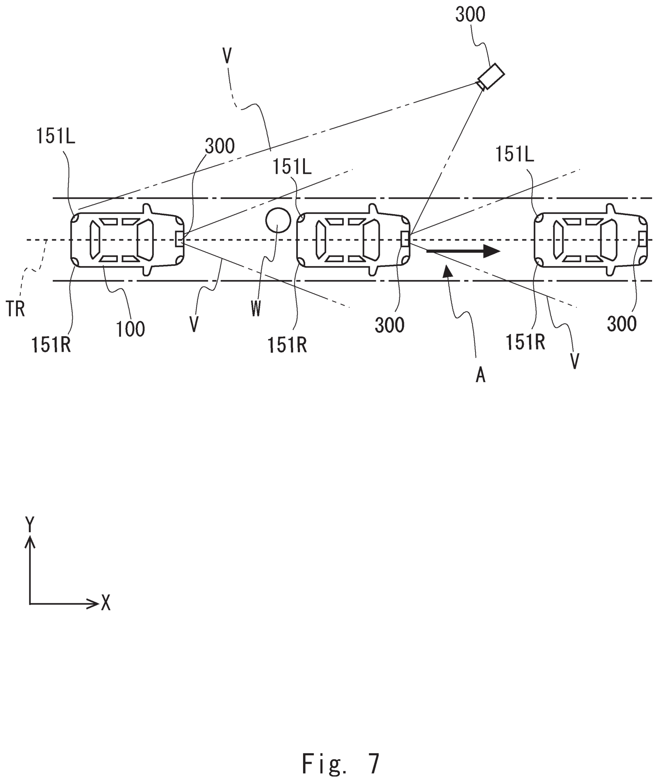

With reference to Fig. 7, a system 50 according to a second embodiment will be described. Fig. 7 is an upper diagram schematically showing a configuration of the system 50. Since the basic configuration of the system is similar to that in the first embodiment, the descriptions thereof will be omitted as appropriate. For example, the control system of the system 50 has a configuration similar to that in Fig. 4. In Fig. 7, an in-vehicle camera is used as the sensor 300. The sensor 300 is installed in front of a vehicle 100, and captures an image of a vehicle 100 just before the vehicle 100.

For example, the sensor 300 mounted on the second vehicle 100 captures an image of the rear part of the first vehicle 100. In this case, the second vehicle 100 is a mounting vehicle on which the sensor 300 is mounted. Further, the first vehicle 100 is a nearby vehicle which is near the mounting vehicle. An angle of view V of the sensor 300 of the second vehicle 100 includes lights 151L and 151R. A blinking control unit causes the rear lights 151L and 151R of the first vehicle 100 to blink.

Accordingly, the sensor 300 mounted on the second vehicle 100 captures an image of the blinking lights 151L and 151R. Then, the communication apparatus 130 of the vehicle 100 transmits the captured image to the server 200. The recognition unit 255 can recognize the blinking pattern of the first vehicle based on an imaging result in the sensor 300 mounted on the second vehicle 100. As a matter of course, a processor mounted on the vehicle 100 may detect the switching timing between ON and OFF of the lights 151L and 151R. Then the communication apparatus 130 of the vehicle 100 may transmit the switching timing to the server 200. In this case, the recognition unit 255 recognizes the blinking pattern based on the transmitted switching timing.

Further, in this embodiment as well, when one sensor 300 cannot capture an image of the lights 151L and 151R, the recognition unit 255 can integrate imaging results in the plurality of sensors 300 to recognize the blinking pattern. For example, a worker W is present between the third vehicle 100 and the second vehicle 100. In this case, the sensor 300 mounted on the third vehicle 100 cannot capture an image of the light 151L. That is, the light 151L enters the blind spot of the sensor 300 due to the presence of the worker W. In this case, the switching timing of the light 151L is detected based on the imaging result captured by another sensor 300.

Note that the in-vehicle sensor 300 is not limited to capture an image of the front vehicle and may also capture an image of the rear vehicle. In this case, the sensor 300 may be mounted in such a way that it faces toward the rear side of the vehicle 100. Alternatively, the sensor 300 may be disposed so as to capture an image of a side vehicle 100.

Hereinafter, travel control examples for controlling traveling of the vehicle 100 in a system will be explained.

### <A. Travel Control Example 1>

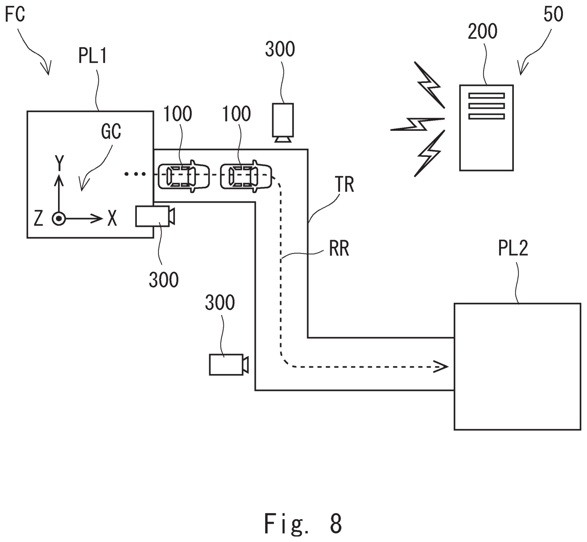

Fig. 8 is a conceptual diagram showing a configuration of a system 50 according to a travel control example 1. The system 50 includes a plurality of vehicles 100, each of which corresponds to a mobile body, a server 200, and one or more sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of sensors 300 are installed along the traveling path TR in the factory FC. The positions of the respective sensors 300 in the factory FC are adjusted in advance. The vehicle 100 moves from the first place PL1 to the second place PL2 along the traveling path TR by unmanned driving.

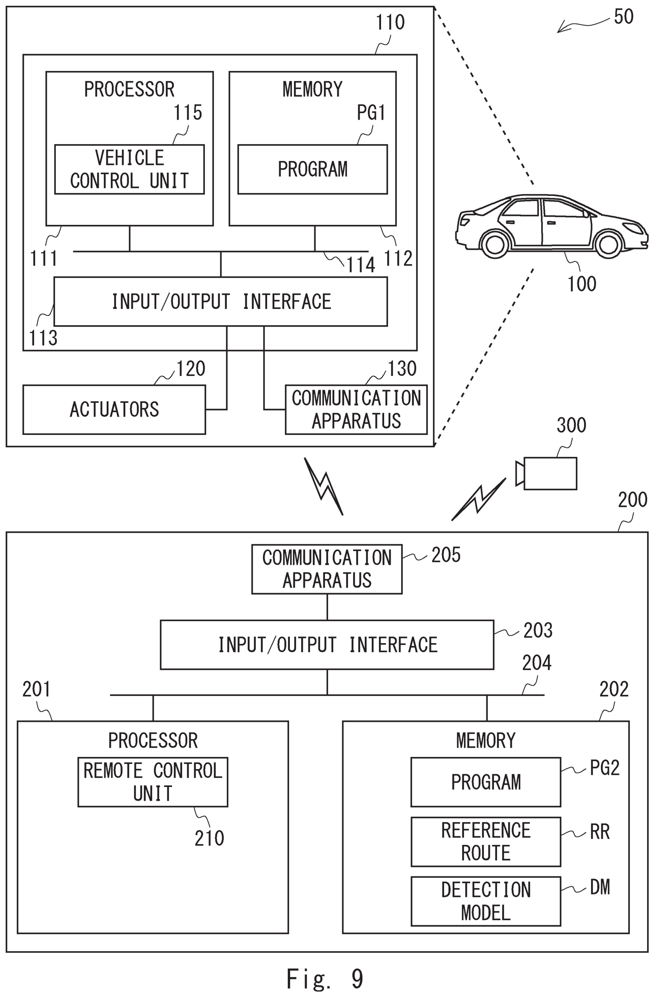

Fig. 9 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The sensor 300 is a sensor that is provided outside the vehicle 100. The sensor 300 according to this embodiment is a sensor that captures the vehicle 100 from the outside of the vehicle 100. The sensor 300 includes a communication apparatus (not shown) and can communicate with other apparatuses such as the server 200 and so on by wired communication or wireless communication.

Specifically, the sensor 300 is composed of a camera. The camera as the sensor 300 captures an image including the vehicle 100, and outputs the captured image as a result of detection.

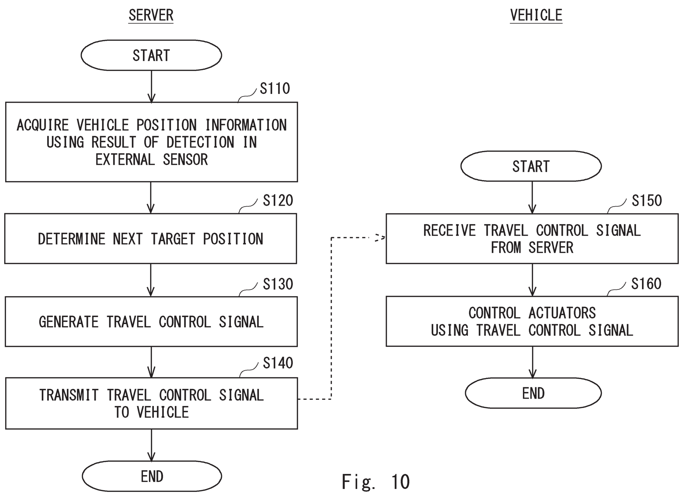

Fig. 10 is a flowchart showing a processing procedure of travel control of the vehicle 100 according to the travel control example. In the processing procedure shown in Fig. 10, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the sensor 300.

Specifically, in Step S110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and the reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

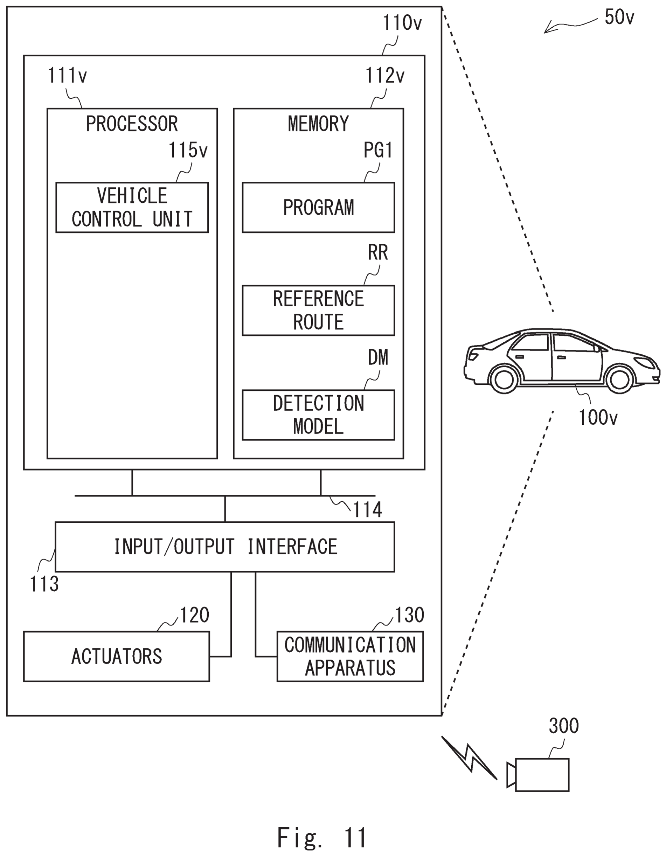

Fig. 11 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

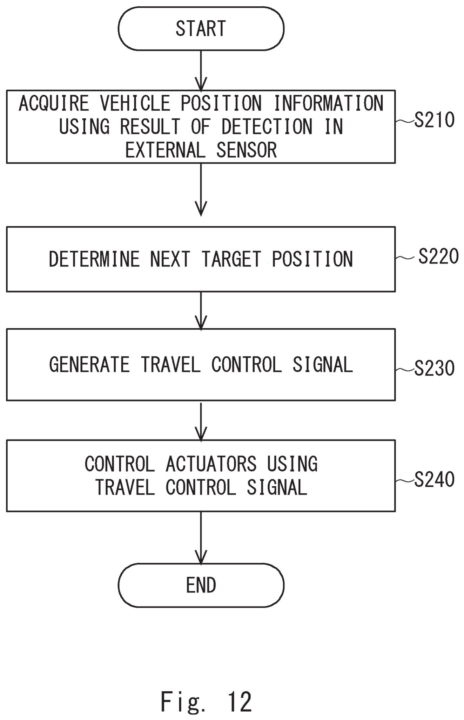

Fig. 12 is a flowchart showing a processing procedure of travel control of the vehicle 100v in Travel control Example 2. In the processing procedure shown in Fig. 12, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the sensor 300. In Step S220, the processor 111v determines the target position that the vehicle 100v should go next. In Step S230, the processor 111v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other Travel Control Examples

(YY1) In the above examples, the sensor 300 is a camera. On the other hand, the sensor 300 may not be a camera, and may instead be, for example, Light Detection And Ranging (LiDAR). In this case, the result of the detection output from the sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection by the sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection by the sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone. For example, a leading vehicle 100v may transmit control instruction values to the following vehicle 100.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. In a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. In this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

In the above travel control examples 1 and 2 described above as well, the travel control shown in Figs. 3-7, etc. can be applied. For example, the remote control unit 210 shown in Fig. 9 performs travel control by the image processing. In Figs. 8-12 as well, travel control by the suspension string 32 and the control equipment 30 shown in Figs. 3 and 4 may be applied.

Further, some or all of the processing in the vehicle 100, the server 200, the sensor 300, the robot 600 and the like can be implemented as a computer program. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle manufacturing system (50) that controls traveling of a plurality of vehicles (100) during a manufacturing process or a transporting process, the vehicle manufacturing system comprising:
a plurality of cameras (300) configured to capture an image of a traveling area where the vehicles (100) travel and an area near the traveling area;
a blinking control unit (253) configured to control a plurality of lights (151) of the vehicles in such a way that the vehicles cause the lights (151) to blink according to a blinking pattern; and
a recognition unit (255) configured to recognize, when one of the cameras (300) does not capture an image of the plurality of lights (151), a blinking pattern of the lights based on captured images captured by at least two cameras.

2. The vehicle manufacturing system according to claim 1, wherein
the blinking control unit (253) controls lights (151)of the plurality of vehicles in such a way that the blinking pattern varies according to the vehicle, and
the recognition unit (255) identifies the vehicle based on the blinking pattern.

3. The vehicle manufacturing system according to claim 2, wherein the blinking control unit (253) recognizes the blinking pattern in accordance with a switching timing when the plurality of lights switch between ON and OFF.

4. The vehicle manufacturing system according to claim 3, wherein
the plurality of lights (151) include left and right lights (151L, 151R) of the vehicle, and
the switching timing varies between the left and right lights (151L, 151R).

5. The vehicle manufacturing system according to any one of claims 1 to 4, wherein
the plurality of cameras (300) include in-vehicle cameras mounted on the vehicles,
the in-vehicle camera captures an image of a nearby vehicle that travels near a mounting vehicle on which the in-vehicle camera is mounted, and
the mounting vehicle recognizes a blinking pattern of lights of the nearby vehicle.

6. The vehicle manufacturing system according to any one of claims 1 to 5, wherein the plurality of lights are turned on at a start timing and an end timing of the blinking pattern.

7. A vehicle manufacturing method for performing control of a plurality of vehicles (100) during a manufacturing process or a transporting process, the vehicle manufacturing method comprising:
capturing an image of a traveling area where the vehicles travel and an area near the traveling area by a plurality of cameras (300);
controlling a plurality of lights (151) of the vehicles in such a way that the vehicles cause the lights (151) to blink according to a blinking pattern; and
recognizing, when one of the cameras (300) does not capture an image of the plurality of lights (151), a blinking pattern of the lights based on captured images captured by at least two cameras (300).

8. The vehicle manufacturing method according to claim 7, comprising:
controlling lights (151) of the plurality of vehicles in such a way that the blinking pattern varies according to the vehicle; and
identifying the vehicle based on the blinking pattern.

9. The vehicle manufacturing method according to claim 8, comprising recognizing the blinking pattern in accordance with a switching timing when the plurality of lights switch between ON and OFF.

10. The vehicle manufacturing method according to claim 9, wherein
the plurality of lights include left and right lights (151L, 151R) of the vehicle, and
the switching timing varies between the left and right lights.

11. The vehicle manufacturing method according to any one of claims 7 to 10, wherein
the plurality of cameras (300) include in-vehicle cameras mounted on the vehicles,
the in-vehicle camera captures an image of a nearby vehicle that travels near a mounting vehicle on which the in-vehicle camera is mounted, and
the mounting vehicle recognizes a blinking pattern of lights (151) of the nearby vehicle.

12. The vehicle manufacturing method according to any one of claims 7 to 11, wherein the plurality of lights are turned on at a start timing and an end timing of the blinking pattern.

13. A control apparatus for controlling traveling of a plurality of vehicles during a manufacturing process or a transporting process, the control apparatus comprising:
a captured image acquisition unit (252) configured to acquire, from each of a plurality of cameras (300), a captured image obtained by capturing an image of a traveling area where the vehicles (100) travel and an area near the traveling area;
a blinking control unit (253) configured to control a plurality of lights (151) of the vehicles (100) in such a way that the vehicles (100) cause the lights (151) to blink according to a blinking pattern; and
a recognition unit (255) configured to recognize, when one of the cameras (300) does not capture an image of the plurality of lights, a blinking pattern of the lights based on captured images captured by at least two cameras (300).

14. The control apparatus according to claim 13, wherein
the blinking control unit (253) controls lights of the plurality of vehicles in such a way that the blinking pattern varies according to the vehicle; and
the recognition unit (255) identifies the vehicle based on the blinking pattern.

15. The control apparatus according to claim 14, wherein the blinking control unit (253) recognizes the blinking pattern in accordance with a switching timing when the plurality of lights switch between ON and OFF.
